Europäisches Patentamt

European Patent Office

Office européen des brevets

(11) Publication number: **0 133 037**
**A1**

## (12) EUROPEAN PATENT APPLICATION

(21) Application number: **84305130.1**

(22) Date of filing: **27.07.84**

(51) Int. Cl.⁴: **F 16 B 13/06**

(30) Priority: **27.07.83 GB 8320237**

(43) Date of publication of application:
**13.02.85 Bulletin 85/7**

(84) Designated Contracting States:
**AT BE CH DE FR GB IT LI LU NL SE**

(71) Applicant: **Alanberry Products Limited**
**Unit 17 North Street Industrial Estate North Street**
**Brierley Hill West Midlands(GB)**

(72) Inventor: **Handley, Alan Roy**
**6 Oak Tree Gardens**
**Wordsley Stourbridge West Midlands(GB)**

(74) Representative: **Duncan, Angus Henry et al,**
**Barker, Brettell & Duncan 138 Hagley Road**
**Edgbaston Birmingham, B16 9PW(GB)**

(54) Fastener.

(57) A wall plug for securing screws in both solid and cavity walls has a tubular body 10 with an enlarged head 12 at one end. A second part of the plug, fitting into the body 10 at its other end, has prongs 26, 28 which engage cam surfaces 22 on the body. The screw extends through the tubular body 10 and engages a screw-thread 24, 24' inside the second part of the plug, the head 36 of the screw engaging the head 12 of the body. As the screw is tightened, the two parts of the plug are drawn together, so that the prongs 26, 28 are spread apart by the cam surfaces 22, projecting through windows 20 in the body 10 to engage the sides of a hole in a solid wall or the back of a panel 16 in the case of a cavity wall.

FIG.2.

EP 0 133 037 A1

Croydon Printing Company Ltd

1

## FASTENER

This invention relates to a fastener of the kind comprising a tubular body, a head at one end of the body, a nut angularly fast with the body at the opposite end to the head, and a screw extending through the body and engaged with the nut, arranged so that as the screw is tightened, the fastener can be anchored in or to a hole in which the tubular body is located.

The present invention is more particularly concerned with fasteners of this kind where the tubular body is intended to extend through a panel, wall or the like (herein for convenience referred to collectively as "a panel") and where the opposite side of the panel is inaccessible. The panel for example may be of wall board, plasterboard or hardboard.

Another kind of fastener is often used in blind-hole situations, where for some reason it is impossible to engage a screw satisfactorily in the material in which the hole is provided, for example because although it is of sufficient thickness it is of soft material such as plaster.

The object of the present invention is to provide an improved fastener primarily suitable for the first mentioned purpose and possibly also suitable for the second mentioned purpose.

A further object of the invention is to provide a re-usable fastener for these purposes.

According to the invention, a fastener of the kind mentioned is characterised in that the body is provided with a cam surface, the nut is axially movable relative to the body and carries a prong extending from the nut towards the head and the prong is engageable with the cam surface, so that rotation of the screw displaces the nut towards the head and cams the prong to project at an increasing angle to the axis of the screw.

In practice a plurality of prongs is desirable and hence when the fastener is used for the first mentioned purpose these prongs may extend generally in strut-like fashion at equispaced positions around the nut between the nut and points on the opposite side of the panel to that engaged by the head, the points of engagement being spaced over a diameter substantially larger than that of the body itself. Alternatively, if the fastener is used in a blind hole situation the prongs wedge in the bore to like effect.

The invention will now be more particularly described by way of example with reference to the accomanying drawings wherein:-

Figure 1 is a side elevation showing a fastener in position relative to a panel (shown in chain dot line) but not secured;

Figure 2 is a view similar to Figure 1 showing the fastener being adjusted towards the secured position;

Figure 3 is a view similar to Figure 2 but showing the fastener fully secured;

Figure 4 is an axial section through the body of the fastener shown in Figures 1 to 3;

3

Figure 5 is a section on line V-V of Figure 4;

Figure 6 is a view of the fastener body taken from the left-hand side as shown in Figure 4;

Figure 7 is a section on line VII-VII of Figure 4;

Figure 8 is an axial section through the nut and prong component shown in Figures 1 to 3;

Figure 9 is a view of the nut and prong component taken from the right-hand side as shown in Figure 8; and

Figure 10 is an axial section through a different nut and prong component.

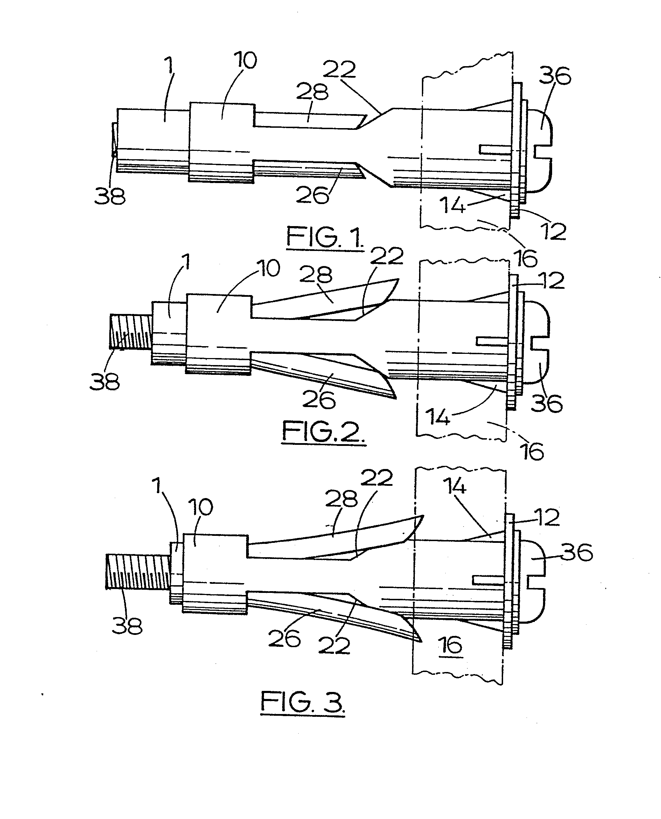

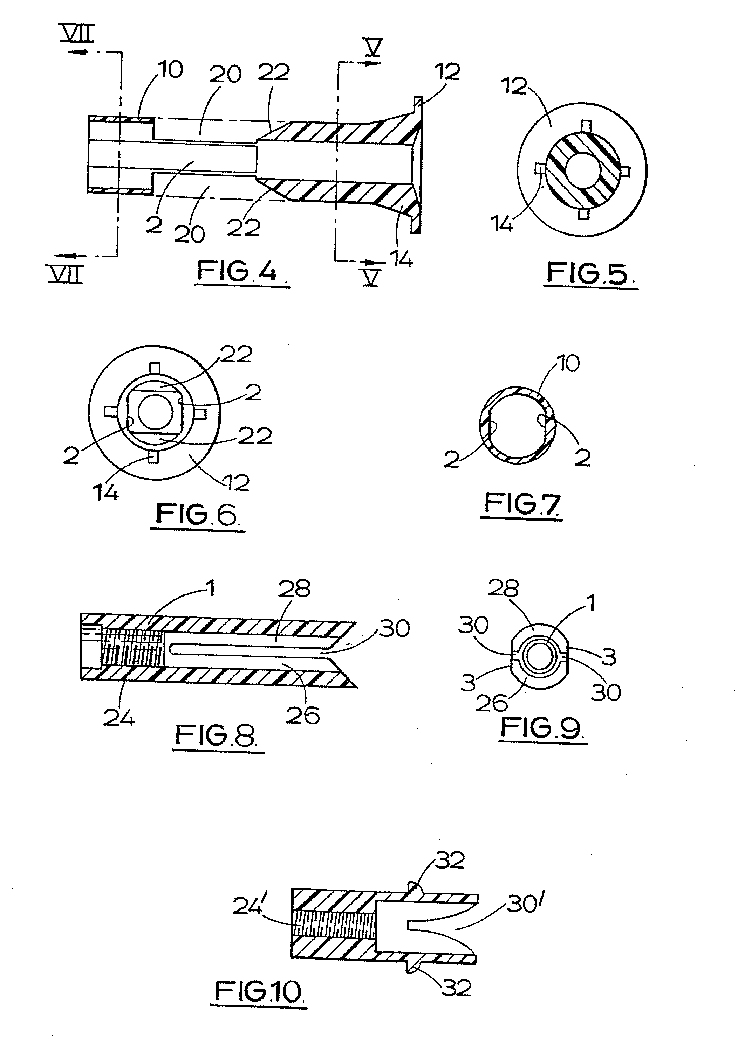

Referring to the drawings and particularly Figure 4, the body may conveniently be made as an injection moulding of a suitable plastics material and comprises a tube 10 of substantially uniform diameter over its length integral with a head 12 at one end. A series of ribs 14 are provided primarily for the purpose of embedding into the panel when the tube is pushed into a hole so that the head 12 seats on the surface of the panel, generally as shown in Figures 1 to 3, in which a panel 16 is shown by chain dot lines.

The body houses a nut 1 at the left-hand end as shown in the drawings and the nut is made angularly fast but axially movable relative to the body by providing complementary flats 23 inside the body 10 and on the outer surface of the nut. In a modification the body may be provided with one or more internal axially extending ribs which engage in complementary grooves in the nut, to like effect.

4

The body may be provided with one or more windows; in the version shown in the drawings two windows 20 are provided which are generally diametrically related midway along the length of the body. The end surface of the body at the axial end of each window adjacent the head is bevelled to form a cam 22.

The nut and prong component of Figures 8 and 9 is generally tubular and has an internal screw-thread 24. The tubular component is slit axially to form two separate prongs 26, 28.

The exact shape of the slit 30 depends upon the material of which the nut and prongs are manufactured, the thickness of the wall of the tube and other dimensions, and the characteristics required. The modified component shown in Figure 10 is again generally tubular, having a portion of relatively small internal diameter at the left-hand end as shown in the figure, formed with an internal screw-thread 24', and a relatively large internal diameter over the remainder of its length. It has a generally V-shaped slit 30' which means that each prong is generally semi-circular at its root adjacent the nut and comparatively stiff. A rectangular slot, rather than the V-shaped slit, would mean that each prong was narrower and had less transverse curvature and would therefore be more flexible (all other factors being equal).

Means may be provided to make the nut axially captive to the tubular body after assembly to the Figure 1 position and these may be in the form of the small projections 32 shown in Figure 10, so that when the nut is pushed into the lefthand end of the body the prongs deflect towards one another until the projections 32 snap-engage into the windows.

5

It will be noted that the wall thickness of the tubular body 10 at the righthand portion, formed with the cam surfaces 22 is thicker than that at the lefthand end which houses the nut portion. However, if a metal body were employed, the wall portion could be press-formed to provide the cams without the need for extra thickness.

The fastener is completed by a screw, of which only the head 36 and the tip 38 are seen in Figures 1 to 3.

In installation, an appropriate hole is made in the panel 16 and the assembled fastener as seen in Figure 1 is pushed into the hole, and preferably is pressed firmly against the outer surface of the panel 16 so that the ribs 14 embed, although the fastening action is such as to draw the tubular body firmly into the ribs embedded position as will be seen hereinafter.

When the screw is rotated in the appropriate direction from Figure 1 position, the effect is to draw the nut axially towards the head, and the prongs are spread by the action of the cam surfaces, as seen in Figure 2.

Figure 3 assumes that the panel 16 is of relatively soft material such as plasterboard so that the prongs do not seat on the adjacent face of the plasterboard but become embedded. However, with a harder material the tips of the prongs would seat upon the panel surface.

It will be noted that axial position of the screw is unaltered between Figures 1 and 3.

It will be appreciated that installation can be completed as shown in Figure 3 and then the screw removed to allow some object which is to be fixed to the wall panel or like to be located, threaded by the screw, and then the screw re-inserted and returned to the fully screwed home position. Alternatively, the fastener installation and object fixing can be completed in a single operation.

If the nut is made of a resilient material such as a suitably tough and slightly flexible synthetic resinous material, for example a polycarbonate, the nut may return via the Figure 2 position to the Figure 1 position when the screw is released. This is inherently less likely if the splayed tips of the prongs have engaged and penetrated the panel as shown in Figure 3.

Return of the prongs from the Figure 3 position to the Figure 1 position is a useful feature in that it enables the fastener to be re-usable. In the event that release of the screw does not result in automatic prong return, it is only necessary for the screw to be part unscrewed, and the screwhead removed away from the head of the tubular body and then pushed to the left as shown in Figure 3 and this will return the nut to the Figure 1 position, thus freeing the prong tips from the engagement with the panel, and also tending to draw them back to the Figure 1 position as a result of movement of the prong roots into the body.

It will be appreciated that if the same fastener is used in a blind hole situation where the hole is only slightly larger than the tubular body 10, the prongs will be unable to splay to the same extent as shown in Figure 3, but it will be noted that the same length of screwthreads remain engaged at all times and if the screw is tightened with a satisfactory load the prongs will inevitably be forced against the wall of the hole.

It will be noted that in normal usage the prongs (when extended) extend in an arc with the convex side of the arc generally at an acute angle to the axis of the screw (or more strictly, from a geometrical aspect, a secant of that arc lies at an acute axis to the angle of the screw). The minimum thickness of panel with which the panel can be installed depends upon the length of body lying between the cam surface and the head. The angle of the cam surface represents the maximum angle of the prongs, and it is particularly observed that the prongs are not intended to flatten out so that they lie in a plane normal to the axis of the screw, since in that position they would be relatively weak. They are intended to act as struts in compression between the panel and the screw and not as detents supporting load by their shear strength. In this connection, the use of a suitable V-shaped slot results in the prongs having an increasing stiffness along their length, and effectively an increase in strength. Hence there is an increasing resistance to the camming action but the ability to support greater loads in the installed position.

## CLAIMS

1. A fastener comprising a tubular body (10), a head (12) at one end of the body (10), a nut (1) angularly fast with the body (10) at the opposite end to the head (12), and a screw extending through the body (10) and engaged with the nut (1), characterised in that the body (10) is provided with a cam surface (22), the nut (1) is axially movable relative to the body (10) and carries a prong (26, 28) extending from the nut (1) towards the head (12) and engageable with the cam surface (22), so that rotation of the screw displaces the nut (1) towards the head (12) and cams the prong (26, 28) to project at an increasing angle to the axis of the screw.

2. A fastener according to Claim 1 characterised in that the body (10) has a plurality of windows (20) extending axially from a like number of cam surfaces (22), and the nut (1) carries the same plurality of prongs (26, 28) each lying within a corresponding window (20) and arranged to project out through the said window (20).

3. A fastener according to Claim 2 characterised in that the nut (1) is held angularly fast by engagement of the prongs (26, 28) in the windows (20).

4. A fastener according to Claim 1 or Claim 2 characterised in that separate means (2, 3) are provided for holding the nut (1) angularly fast.

5. A fastener according to Claim 4 characterised in that the said separate means (2, 3) comprise a non-circular shape of the nut (1) and a complementary non-circular shape in the body (10).

6. A fastener according to Claim 5 characterised in that the said separate means comprise complementary flats (2, 3) on the nut (1) and the body (10).

7. A fastener according to any preceding claim characterised in that the nut (1) is provided at one end of a generally tubular component slit axially from its end opposite to screw-threads (24; 24') to form a series of prongs (26, 28) between slits (30; 30').

8. A fastener according to any preceding claim, characterised in that the head (12) is provided with one or more projections (14) to render it non-rotatable when installed in an aperture.

0133037

1/2

FIG. 1.

FIG. 2.

FIG. 3.

0133037

2/2

FIG.4.

FIG.5.

FIG.6.

FIG.7

FIG.8.

FIG.9.

FIG.10.

**EUROPEAN SEARCH REPORT**

European Patent
Office

| | DOCUMENTS CONSIDERED TO BE RELEVANT | | EP 84305130.1 |
|---|---|---|---|

| Category | Citation of document with indication, where appropriate, of relevant passages | Relevant to claim | CLASSIFICATION OF THE APPLICATION (Int. Cl. 4) |
|---|---|---|---|
| A | <u>DE - A1 - 3 115 040</u> (LIEBIG)<br>*Claim 1; fig. 1 and 2 * | 1 | F 16 B 13/06 |
| A | <u>EP - A1 - 0 015 305</u> (LIEBIG)<br>* ABSTRACT * | 1 | |
| A | <u>EP - A1 - 0 008 085</u> (HAINKE)<br>* Abstract * | 1 | |
| A | <u>EP - A1 - 0 002 654</u> (LIEBIG)<br>* Abstract * | 1 | |

|  |
|---|
| TECHNICAL FIELDS SEARCHED (Int. Cl. 4) |
| F 16 B |

The present search report has been drawn up for all claims

| Place of search | Date of completion of the search | Examiner |
|---|---|---|
| VIENNA | 03-10-1984 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82